(19) Europäisches Patentamt
European Patent Office
Office européen des brevets

(11) Publication number: **0 305 611 B1**

# (12) EUROPEAN PATENT SPECIFICATION

(45) Date of publication of patent specification: **24.04.91**

(51) Int. Cl.$^5$: **E21B 37/06**, E21B 43/27, C23G 1/02

(21) Application number: **87307700.2**

(22) Date of filing: **01.09.87**

## (54) Foaming acid-containing fluids.

(43) Date of publication of application:
**08.03.89 Bulletin 89/10**

(45) Publication of the grant of the patent:
**24.04.91 Bulletin 91/17**

(84) Designated Contracting States:
**GB NL**

(56) References cited:
**US-A- 3 572 440**
**US-A- 3 849 348**
**US-A- 4 113 631**

(73) Proprietor: **UNION OIL COMPANY OF CALIFORNIA**
**1201 West 5th Street**
**Los Angeles California 90017(US)**

(72) Inventor: **Watkins, David R.**
**5292 Thorn Three**
**Irvine, CA 92715(US)**

(74) Representative: **Jack, Bruce James et al**
**FORRESTER & BOEHMERT Widenmayerstrasse 4/I**
**W-8000 Munchen 22(DE)**

**EP 0 305 611 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the removal of acid soluble substances from various media, and particularly to foam treating fluids useful for contacting permeable or impervious media to dissolve a portion of the media surfaces or materials deposited therein or thereon to increase the permeability of the media, or to clean the media, and more particularly useful for dissolving acid-soluble portions of a subterranean geological reservoir, acid-soluble materials previously deposited in the reservoir or a well and, in some embodiments, also of dissolving organic materials present in the reservoir or a well, as well as dissolving scale from an industrial vessel or conduit.

It has long been known to contact various solid media with a treating fluid capable of dissolving portions of the media or materials present in or on the surface. If a medium is permeable, such as a subterranean reservoir or a screen in a well, the treating fluid can increase the permeability therethrough. If a medium is impermeable, such as an industrial vessel or conduit, the treating fluid cleans the surface. Typical of such treating solutions is an aqueous solution of a mineral acid capable of dissolving carbonates present in a reservoir or scale and other inorganic materials previously deposited in the reservoir or vessel by fluids flowing therethrough. It is also known to remove from such media organic materials such as paraffins, viscous oil, tar, wax, asphaltenes, and resin precipitates of petroleum origin, by contacting the media with a treating fluid containing both a water-soluble acid component and an oil-soluble organic solvent, such as crude oil or a fraction thereof. Such treating fluids typically also contain a surface active agent and are in emulsion or dispersed form. Such emulsions or dispersions are often relatively easy to form with any one of a number of anionic, cationic, nonionic, or amphoteric foaming agents.

In order to minimize the liquid volume of treating fluid required for a given treatment and decrease the density of the treating fluid, it is known to add to a liquid treating fluid a foaming agent and a gas to form a relatively large volume of foamed treating fluid.

U.S. Patent 3,572,440 to Hutchinson et al. discloses a preformed well circulation foam containing water, a mineral acid or lower organic acid component, a gas and an organic foaming agent. Suitable foaming agents are anionic (preferred), cationic, nonionic and amphoteric agents. Mixtures of two or more foaming agent species are contemplated and a mixture of alkylbenzene sulfonic acids and alpha-olefin sulfonic acids is preferred.

Certain cationic quaternary ammonium compounds have been suggested for use in well-acidizing compositions for purposes other than forming a foam.

U.S. Patent 3,932,296 to Byth describes a corrosion inhibitor for hydrochloric acid used in acidizing formations which inhibitor is a mixture of (1) the reaction product of a particular nitrogen compound such as an alkyl amine, an aldehyde, a fatty acid and a first quaternary ammonium compound, and (2) a second quaternary ammonium compound which is different from the first such compound.

U.S. Patent 4,201,678 to Pye et al. describes an aqueous foam drilling fluid for high temperature reservoirs employing as a foaming agent a mixture of an amphoteric betaine and a salt of a linear aliphatic or alkyl aryl hydrocarbon sulfonate. Neither acid nor solvent is used in the drilling fluid.

Foams containing only water, an acid component, and a gas are relatively easy to form. Any one of a wide variety of types of foaming agents can be used. When an organic solvent component and an emulsifying agent are also employed in the composition and the resulting emulsion or dispersion foamed, the foam is more difficult to form and a more effective and different foaming agent is often required. Also, it is common practice in many instances to employ either type of foam under conditions adverse to its stability e.g., pumping it several thousand feet down a well and into the surrounding reservoir which is at an elevated temperature and pressure, contacting the foam with crude oil and/or aqueous solutions containing calcium chloride, and the like, or introducing it into a vessel or conduit at elevated temperature and/or pressure. Such conditions require that an especially effective foaming agent be used if the foam is to remain stable long enough for the treatment to be completed. In many foamed treating agent compositions containing an acid component, various other additives are employed to impart a number of attributes to the fluid. Such additives are often adverse to foam stability. Examples of such additives include corrosion inhibitors, antisludge agents, and emulsifying agents, commonly used in well-acidizing treating treating fluids. When an acid-containing foamed treating agent dissolves components of a scale or formation rock, the dissolved components sometimes decrease foam stability.

While each of the aforementioned compositions has met with some success in particular applications, the need exists for a further improved foamed treating fluid composition and method.

Accordingly, a principal object of this invention is to provide a composition and method for forming a stable foamed treating fluid containing an acid component.

Another object of this invention is to provide such a composition which also contains organic solvent

and emulsifying agent components.

Yet another object of this invention is to provide such a composition which remains stable and effective even though it contains or becomes admixed with or dissolves additives or contaminants which are adverse to the stability of the foam.

A further object of this invention is to provide a method for using a foam treating fluid in treating subterranean reservoirs or wells or cleaning industrial vessels or conduits.

Other objects, advantages and features of this invention will become apparent to those skilled in the art from the following description and appended claims.

## SUMMARY OF THE INVENTION

Briefly, this invention provides a composition and method for treating solid surfaces with a foamed treating fluid containing: about 5 to 99 parts by weight of an aqueous solution of an acid component, containing about 1 to 70 parts by weight acid and about 30 to 99 parts by weight water; about 0.04 to 1,200 parts by weight of a gas; and about 0.1 to 10 parts by weight of a foaming agent, comprising a mixture of about 0.01 to 9.5 parts by weight of a quaternary ammonium cationic surface active agent, and about 0.01 to 9.5 parts by weight of either an alkylamido alkylamine oxide surface active agent or an amphoteric betaine surface active agent having the formula:

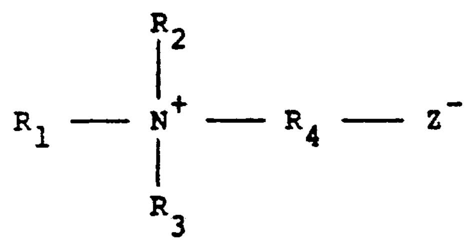

wherein $R_1$ is a high molecular weight alkyl radical having from 10 to 18 carbon atoms, $R_2$ and $R_3$ are each alkyl radicals having from about 1 to 3 carbon atoms, $R_4$ is an alkylene or hydroxyalkylene radical having from 1 to 4 carbon atoms, and Z is an anion selected from the group consisting cf $SO_3^{=}$ and $COO^{=}$ radicals. Optionally, the treating fluid can also contain about 1 to 95 parts by weight of an organic solvent component selected from the group consisting of polar solvents, hydrocarbon solvents, halogenated hydrocarbon solvents, and mixtures thereof, and an effective amount, for example about 0.05 to 5 parts by weight per 100 parts by weight of organic solvent components and acid component combined, of an emulsifying agent selected from the group consisting of water-soluble anionic, cationic, nonionic, and amphoteric surface active agents.

The foamed treating fluid can be used to increase the permeability of subterranean reservoirs and filter media present in wells penetrating such subterranean reservoirs, and to remove scale or deposits from industrial vessels and conduits.

## DETAILED DESCRIPTION OF THE INVENTION

In treating subterranean reservoirs and filter media present in wells penetrating such subterranean reservoirs with a treating fluid to improve fluid-flow in the vicinity of the well, and in using such treating fluid to remove scale from industrial vessels and conduits, there are common problems. It is oftentimes desirable to minimize the liquid volume of treating fluid required to carry out a job by employing the treating fluid in the form of a foam. Under the various conditions of use, e.g., high temperature, contact with contaminants, and presence of various additives in the treating fluid, stability of the foam is difficult to maintain. Therefore, an especially effective foaming agent is required.

In brief, the foamed treating fluid of this invention contains: (1) about 5 to 99 parts by weight, preferably about 25 to 95 parts by weight, of an aqueous solution of an acid component containing (a) about 1 to 70 parts by weight, preferably about 5 to 40 parts by weight of an acid and (b) about 30 to 99 parts by weight, preferably about 45 to 85 parts by weight, of water; (2) about 0.04 to 1,200 parts by weight, preferably about 10 to 800 parts by weight, of a gas; and (3) about 0.1 to 10 parts by weight, preferably about 0.2 to 5 parts by weight, of a foaming agent comprising a mixture of: (a) about 0.01 to 9.5 parts by weight,

preferably about 0.1 to 5.0 parts by weight, of certain quaternary ammonium surface active agents and (b) about 0.01 to 9.5 parts by weight, preferably about 0.1 to 5 parts by weight, of either an alkylamido alkylamine oxide surface active agent or an amphoteric betaine surface active agent. Optionally, the treating fluid can also contain: (4) about 1 to 95 parts by weight, preferably about 5 to 40 parts by weight, of an organic solvent component; and (5) an effective amount, preferably about 0.05 to 5 parts by weight per 100 parts by weight organic solvent component and acid component combined, of an emulsifying agent.

The acid component used in the foam composition of this invention can be any acid capable of dissolving portions of subterranean reservoirs, for example, carbonates or silicates, or dissolving scale occurring in wells, industrial vessels and conduits, for example, carbonates, sulfates, oxides, silicates, and the like. The acid component can be a mineral acid selected from the group consisting of hydrochloric, phosphoric, nitric, sulfuric, and hydrofluoric acids, or mixtures thereof, or an organic carboxylic acid which forms a water-soluble or acid-soluble salt of an alkali metal and an alkaline earth metal, for example, an acid selected from the group consisting of formic, acetic, chloroacetic, peracetic, trichloroacetic, tartaric, citric, oxalic, and maleic acids, or mixtures thereof. Although the order of mixing the components of the foam is not critical, it is preferred to dilute the concentrated acid component with the required amount of water to provide an aqueous solution of the acid component having the desired acid strength and to use this aqueous solution in generating the foam. When mineral acids are used, such solutions typically have pH values of 1 or less, while organic acid solutions typically have somewhat higher values, e.g., pH about 3 or less. Some water-soluble acids are commercially available at 100 percent concentration. Other water-soluble acids are commercially available in aqueous solution at various concentrations. Regardless of the form of acid used, it is preferred that the foam composition of this invention contains, in part, about 1 to 70 parts by weight acid and about 30 to 99 parts by weight water.

The gas which is used to generate the foam can be any gas, although it is preferred to use an inert easily available gas such as air, any other free-oxygen containing gas, nitrogen, natural gas, methane, butane, or carbon dioxide. Air and nitrogen are preferred. Due to the compressibility of the gas, there is a large difference in the volume composition of the foam depending on whether it is determined at atmospheric conditions or at the conditions of use where the temperature may be several hundred degrees Fahrenheit and the pressure may be several thousand pounds per square inch, such as at the bottom of a well. In the description herein, foam treating fluid composition is expressed at standard conditions of temperature and pressure. It is to be understood that the volume composition may be different when the treating fluid contacts the media to be treated, especially in wells which are generally at elevated pressure. The aqueous foam treating fluid contains about 0.04 to 1,200 parts by weight of gas as measured at standard conditions of temperature and pressure.

The quaternary ammonium cationic surface active agent component of the foaming agent mixture comprises an organic nitrogen compound in which the molecular structure includes a nitrogen atom attached to four individual organic groups, multivalent nitrogen ring compounds such as lauryl pyridinium chloride, and the like. Selected classes of quaternary ammonium compounds include those generally corresponding to the formulas

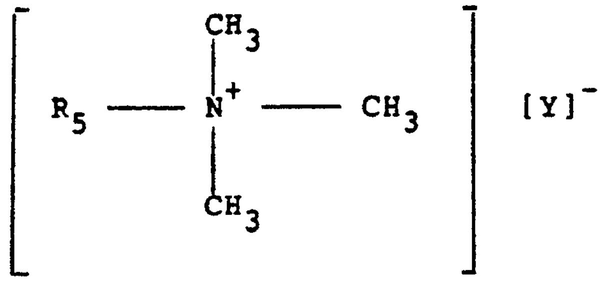

and

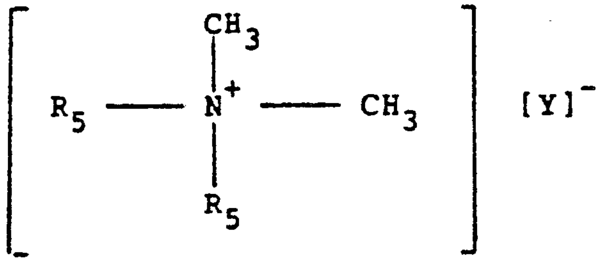

wherein the $R_5$ groups can be the same or different organic groups such as straight, branches, or cyclic, saturated or unsaturated, substituted or unsubstituted groups containing from about 2 to about 18 carbon atoms, and Y is an anion such as chloride, iodide, bromide, sulfate and the like. Specific quaternary compounds which can be employed include, for example, alkyl benzyl dimethyl ammonium chloride wherein the alkyl group contains from about 8 to about 18 carbon atoms; alkyl trimethyl ammonium chloride wherein the alkyl group is selected from octyl, nonyl, decyl, dodecyl, tridecyl, tetradecyl, hexadecyl, octadecyl, octadecenyl, octadecadienyl; dialkyl dimethyl ammonium chloride wherein the alkyl groups are the same or different members of the groups of alkyl radicals set forth above in describing the alkyl trimethyl ammonium chloride; quaternary ammonium chlorides, corresponding to the formula

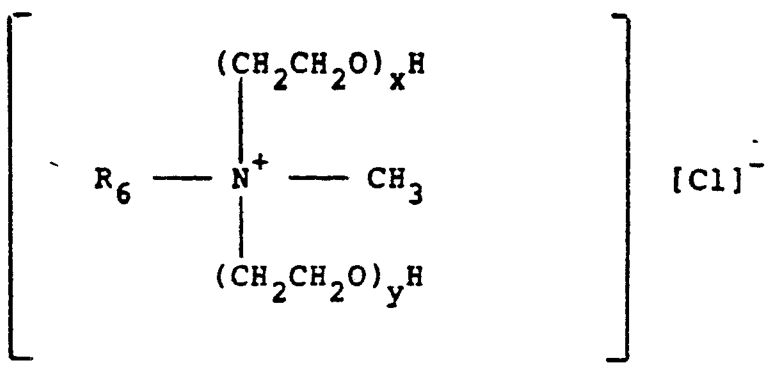

wherein $R_6$ is a $C_3$ to $C_{18}$ hydrocarbon and x and y can range from about 1 to 20, mixtures of the various quaternary ammonium compounds, and the like.

The alkylamido alkylamine oxide component of the surface active agent mixture can be prepared by the condensation of a carboxylic acid with a di- or polyamine or by condensation of such an amine in the presence of an oxidizing agent such as hydrogen peroxide. Amide-linked trialkylamine oxides are formed by the oxidation of tertiary amines with hydrogen peroxide, while hydroxylamines are formed by oxidizing primary and secondary amines. Formulae of suitable alkylamido alkylamine oxides include:

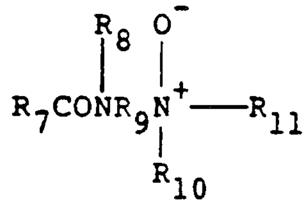

wherein $R_7$ is an alkyl group containing 1 to about 18 carbon atoms (more preferably about 12 to about 18 carbon atoms), $R_8$ is hydrogen or a substituted or unsubstituted, branched or unbranched alkyl group containing 1 to about 18 carbon atoms, $R_9$ is a substituted or unsubstituted, branched or unbranched alkylene group containing 1 to about 18 carbon atoms, and $R_{10}$ and $R_{11}$ are each substituted or unsubstituted, branched or unbranched alkyl groups containing 1 to about 18 carbon atoms. Substituents in $R_9$, $R_{10}$, and $R_{11}$ can include, without limitation, amine oxide, hydroxyl, ethylene oxide, halide, carboxy, sulfoxy, phosphonate, and alkoxy groups. In certain or these compounds, $R_7$ can be derived from coconut, oleic, stearic, or tall oil acids.

In the foaming agent mixture there may be used in place of the alkylamido alkylamine oxide surface active agent an amphoteric betaine having the formula:

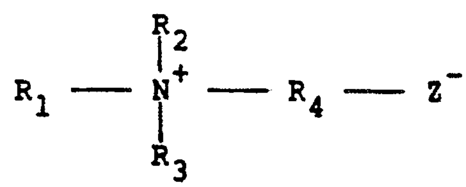

wherein $R_1$ is a high molecular weight substituted or unsubstituted alkyl radical having from 10 to 20 carbon atoms, $R_2$ and $R_3$ are each substituted or unsubstituted alkyl radicals having from about 1 to 3 carbon atoms, $R_4$ is an alkylene or hydroxyalkylene radical having from 1 to 4 carbon atoms, and Z is an anion selected from the group consisting of $SO_3^{=}$ and $COO^{=}$ radicals. Where the anion is $COO^{=}$, the compound is a 1-carboxy-N,N,N-trialkylalkanaminium hydroxide inner salt, and where the anion is $SO_3^{=}$, the compound is a 1-sulfo-N,N,N-trialkylalkanaminium hydroxide inner salt.

The name "betaine" was originally used to designate completely methylated glycine, $(CH_3)$-$N^+—CH_2—CO—O^-$. As used herein, the term "amphoteric betaine" includes certain N-trialkyl derivatives of amino acids, or internal (intramolecular) salts of quaternary ammonium oxonium and sulfonium bases corresponding to the above formula.

Examples of amphoteric betaines which can be useful herein include the high alkyl betaines such as coco dimethyl carboxymethyl betaine, lauryl dimethyl carboxymethyl betaine, lauryl dimethyl alphacarboxyethyl betaine, cetyl dimethyl carboxymethyl betaine, lauryl bis-(2-hydroxyethyl) carboxymethyl betaine, oleyl dimethyl gamma-carboxypropyl betaine, lauryl bis-(2-hydroxypropyl) alpha-carboxy ethyl betaine, ammonium salts of the foregoing and the like. Specific sulfobetaines include coco dimethyl sulfopropyl betaine, stearyl dimethyl sulfopropyl betaine, lauryl bis-(2-hydroxyethyl) sulfopropyl betaine and the like.

Useful amido betaines and amidosulfo betaines include those in which $R_1$ is an amido group, such as a group having the forumula:

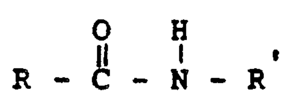

wherein R is a substituted or unsubstituted alkyl radical having about 10 to about 20 carbon atoms and $R'$ is an alkyl radical having about 2 to about 4 carbon atoms or is a cycloalkyl ammonium radical. Representative amido betaine compounds include cocoamidocarboxymethyl betaine, oleylamidocarboxymethyl betaine, myristyloamidocarboxymethyl betaine, cocoamidocarboxypropyl betaine, cocoamidoglycine betaine, and the like. The term "coco," as used herein, refers to groups derived from the fatty acids contained in coconut oil.

One particularly useful compound is generically named "cocoamido betaine" and prepared from dimethylaminopropylamine, coconut oil fatty acid, and sodium chloroacetate. The compound is described in U.S. Patents 3,849,348 and 4,438,045 as having the formula:

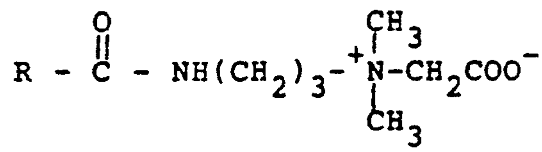

wherein R is the coco group.

Foaming agents are often commercially available as a solution in water or some other solvent at less than 100 percent by weight activity, for example, 30 to 50 percent active. In this discussion, the concentration of the foaming agents is expressed in terms of the total amount of active material present. Since the amount of foaming agent employed is small compared to the amount of the aqueous solution of the acid component and the other components of the foam, the amount of water or other solvent contributed to the foam composition by less than 100 percent active foaming agents is small and is ignored.

Broadly, the foaming agent mixture comprises about 0.01 to 9.5 parts by weight of a quaternary ammonium halide cationic surface active agent and about 0.01 to 9.5 parts by weight of either an alkylamido alkylamine oxide surface active agent or an amphoteric betaine. Preferably, the foaming agent mixture comprises about 0.1 to 5 parts by weight of agent mixture of the quarternary ammonium halide and about 0.1 to 5 parts by weight of either the alkylamido alkylamine oxide or the amphoteric betaine.

The organic solvent component which optionally can be used in the foam composition can be a hydrocarbon solvent, halogenated hydrocarbon, or a polar solvent or mixtures thereof.

Hydrocarbon solvents such as petroleum solvents, petroleum ether, petroleum naphtha, gasoline, petroleum spirit, varnish makers' and painters' naphtha, mineral spirit, kerosene, turbine fuel, high solvency petroleum naphthas, butanes, 2,2-dimethylbutane, n-hexane, isohexane, n-heptane, isooctane, isoheptane, pentene-1, pentene-2, mixed pentenes, isoheptene, isooctenes, naphthas, benzene, toluene, toluene substitutes, xylene, solvent naphthas, ethylbenzene, diethylbenzene, isopropylbenzene, amylbenzene, diamylbenzene, triamylbenzene, tetraamylbenzene, dikerylbenzene-12, amyltoluene, cyclohexane, methylcyclohexane, tetrahydronaphthalene, decahydronaphthalene, diphenyl, coal-tar creosote, turpentine, terpene solvents, dipentene, pinene, p-cymene, p-menthane, pine oils, tall oils, and crude oils are suitable.

Halogenated hydrocarbons, such as methyl bromide, methyl chloride, dichloromethane, chloroform, carbon tetrachloride, ethyl chloride, ethylene dibromide, ethylene chlorobromide, ethylene dichloride, dichloroethylene, β-trichloroethane, trichloroethylene, trichloroethane, tetrabromoethane, 1,1,2,2-tetrachloroethane, tetrachloroethylene, pentachloroethane, hexachloroethane, isopropyl chloride, allyl chloride, propylene dichloride, mixed amyl chloride, n-amyl chloride, dichloropentanes, n-hexyl chloride, monochlorohydrin, dichlorohydrin, epichlorohydrin, glycerol alphamonochlorohydrin, glycerol alpha, gamma dichlorohydrins, monobromobenzenes, dibromobenzene, monochlorobenzene, o-dichlorobenzene, trichlorobenzene, α-chloronaphthalene, monoamyl chloronaphthalene, diamyl chloronaphthalene, dichloroethylether, dichlorodiisopropyl ether, triglycol dichloride, halowax oils, dichlorodifluoromethane, difluorochloroethane, fluorodichloromethane, fluorotrichloromethane, trifluorotrichloroethane, dichlorotetrachloroethane, and ethylidene fluoride can be used.

Polar solvents and mixtures thereof which can be employed include alcohols, ketones, ethers and esters. Alcohols such as methanol, ethanol, n-propanol, isopropanol, n-butanol, isobutanol, sec-butanol, tert-butanol, fusel oil, primary amyl alcohol, pentasol, n-amyl alcohol, sec-amyl alcohol, sec-n-amyl alcohol, methyl amyl alcohol, 2-ethylbutyl alcohol, heptanol-2, heptanol-3, 2-ethylhexanol, capryl alcohol, nonyl alcohol, nonyl alcohol derivatives, diisobutyl carbinol, n-decanol, undecanol, trimethylnonyl alcohol, tetradecanol, heptadecanol, phenol, benzyl alcohol, cyclohexanol, methylcyclohexanol, trimethylcyclohexanol, 4-tert-amyl cyclohexyl alcohol, dimethyl tolyl carbinol, furfuryl alcohol, tetrahydrofurfuryl alcohol, ethylene glycol, propylene glycol, diethylene glycol, dipropylene glycol, trimethyl glycol, triethylene glycol, polyethylene glycols, polypropylene glycol 150, 2-methyl-2, 4-pentane-diol, glycerol, terpene alcohol, alphaterpineol, fenchyl alcohol, and hydroabietyl alcohol are useful.

Ketones such as acetone, methyl acetone, methyl ethyl ketone, methyl n-propyl ketone, methyl isobutyl ketone, methyl n-amyl ketone, ethyl butyl ketone, di-n-propyl ketone, methyl hexyl ketone, diisobutyl ketone, diacetone alcohol, acetonyl acetone, mesityl oxide, cyclohexanone, methyl cyclohexanone, isophorone, and fenchone are suitable.

Ethers including ethyl ether, isopropyl ether, n-butyl ether, diamyl ether, n-hexyl ether, ethylene glycol monomethyl ether, mono and dialkyl ethers of ethylene glycol and their derivatives marketed by Union Carbide Corporation under the trademark "Cellosolve," ethylene glycol mon-n-butyl-ether, ethylene glycol monophenyl ether, ethylene glycol monobenzyl ether, a series of glycol monoethers marketed by The Dow Chemical Company under the trademarks "Dowanol" 4, 2, 3 and diethylene glycol monomethyl ether,

diethylene glycol monoethyl ether, diethylene glycol monobutyl ether, diethyl acetal, 1,2-propylene oxide, 1,4-dihydropyran, pentamethylene oxide, trioxane, terpinyl methyl ether, terpinyl ethylene glycol ether, dichloroethyl ether, triglycol dichloride, glyceryl α-monomethyl ether, glyceryl α, γ-dimethyl ether, glyceryl α-mono-n-butyl ether, glyceryl α-monoisamyl ether, and glyceryl α-γ-diisoamyl ether can be used.

Examples of esters which can be employed include methyl acetate, ethyl acetate, n-propyl acetate, isopropyl acetate, n-butyl acetate, sec-butyl acetate, isobutyl acetate, amyl acetate, sec-amyl acetate, pentacetate, methyl amyl acetate, 2-ethyl butyl acetate, cyclohexyl acetate, methyl cyclohexanyl acetate, ethylene glycol monoacetate, glycol diacetate, ethylene glycol monoethyl ether acetate, ethylene glycol monoethyl ether acetate, methoxy butyl acetate, methyl propionate, ethyl propionate, n-butyl propionate, amyl propionate, ethyl butyrate, methyl butyrate, n-butyl butyrate, ethyl hydroxy-iso-butyrate, diethyl carbonate, diethyl oxalate, dibutyl oxalate, diamyl oxalate, methyl formate, ethyl formate, butyl formate, amyl formate, methyl lactate, ethyl lactate, and butyl lactate.

Most of the above-described solvents are quite immiscible with the aqueous acid components, although certain of the more polar compounds will be at least partially soluble in the aqueous component. In order that the treating composition has a substantially uniform composition, it is necessary to add an emulsifying agent to emulsify or disperse any immiscible phases. Suitable anionic, cationic, nonionic, and amphoteric surface active agents are widely known in the art as emulsifying agents. The emulsifying agent is used in an amount effective to form an emulsion or a dispersion. Generally, about 0.1 to 5 parts by weight emulsifying agent per 100 combined parts by weight organic solvent component and acid component are used. Anionic and nonionic emulsifying agents are preferred. Suitable anionic emulsifying agents include alkyl aryl sulfonates, fatty alcohol sulfates, sulfated and sulfonated amides and amines, sulfated and sulfonated esters and ethers, and alkyl sulfonates. Suitable nonionic emulsifying agents include products obtained by autocondensation of fatty matters and their derivatives with ethylene oxide and/or propylene oxide. Examples of fatty matters are fatty acids, alcohols, esters, aldehydes, and amines. Other nonionic emulsifying agents are products obtained by condensation of phenolic compounds having lateral side chains with ethylene oxide and/or propylene oxide.

Broadly, the emulsifying agents and the foaming agents of this invention are both surface active agents. To some extent, both types of agents have the ability to form both an emulsion and a foam. However, to form a treating composition having a high stability, it is necessary to employ both types of surface active agents.

Some surface active agents are incompatible. Thus, certain anionic and cationic surface active agents are often not used together because one tends to precipitate the other. However, an anionic emulsifying agent can be used with the particular foaming agents of this invention without formation of a precipitate.

The foam can be generated by combining the liquid ingredients in any desired order and introducing the gas into the liquid with agitation. Conveniently, a volume of acid component is placed in a suitable mixing container and, if a diluted acid is desired, mixed with water to form an aqueous acid solution. For example, with the commonly used hydrochloric acid, the commercially available aqueous solution containing about 28 percent by weight hydrochloric acid is diluted to form an aqueous solution containing about 5 to 15 percent by weight hydrochloric acid. Corrosion inhibitors and other additives are added to this aqueous solution. Next, the two foaming agents are mixed into the aqueous acid solution in any order desired or simultaneously. The organic solvent component and emulsifying agent, if used, are added to the mixing container. While the resulting mixture is agitated, the gas is introduced to form the foam. While the foam can be prepared batchwise, it is also possible to prepare it in a continuous operation wherein the aqueous solution of the acid component and the foaming agent mixture is introduced into a conduit at the same time as the organic solvent and emulsifying agent, if used, and the gas is introduced into the conduit as the mixture is moving through it. The foam formed is then led to a point of use.

For treating oil wells and/or the surrounding formations, or pipes or vessels which contain oil, the foam must have stability in the presence of crude oil, since contact of the foam with crude oil is inevitable during the treatment. Due to the destabilizing effect of crude oils on foams, an initially stable prepared foam can destabilize after contacting crude oil, but before it contacts scale or the formation. Therefore, tests of foam stability in Examples 1 through 8, which follow, are conducted with crude oil present.

Further, since many oil wells, formations, and industrial units develop alkaline earth metal carbonate-based scales, it is desirable that foamed acids maintain stability after contacting compounds such as calcium carbonate.

In removing scale from an industrial unit, the foam can be introduced into the unit into contact with the scale and allowed to stand for a length of time sufficient to remove the scale. Alternatively, the foam can be continuously passed through the unit, for example, a conduit, during the treatment.

In treating wells and/or the surrounding subterranean reservoir, the foam can be introduced to the

bottom of the well via a conduit suspended in the well or via the annulus between such a conduit and the sidewall of the well. At the bottom of the well, the foam can be circulated back to the surface or, by applying a pressure to the foam that exceeds the reservoir pressure, the foam can be forced out into the reservoir.

The invention is further illustrated by the following examples which are illustrative of various aspects of the invention and are not intended as limiting the scope of the invention as defined by the appended claims.

Examples 1 through 14

A series of laboratory tests demonstrates the stability of foam made using the foaming agent mixture of this invention, even in the presence of organic solvent and emulsifying agent components, additives, and contaminants.

There are placed in an 800-milliliter beaker 104 grams of an 8.5 percent by weight aqueous solution of hydrochloric acid, 0.5 grams of a mixture of an amine, an acetylenic alcohol, and a cuprous salt as a corrosion inhibitor, and various amounts of foaming agents. There are also added 16.8 grams naphtha as an organic solvent component and 1.0 grams alkyl aryl sulfonate anionic emulsifying agent. To certain of the test compositions, crude oil, calcium carbonate, and/or an anti-sludge agent additive (a water-soluble alkyl phenol) are also added. The mixture is beaten vigorously for two minutes with a manual egg beater to incorporate air and form a foam. The foam is transferred to a 500-milliliter graduated cylinder having a diameter of about 5 centimeters, contaminants are added, if used, and the time for one-half the liquid volume (55 milliliters) to drain from the foam is determined. A longer drain half-life is indicative of a more stable foam. The results of these tests are summarized in Table 1.

The foaming agents used in these tests are as follows:

| Agent | Manufacturer's Designation | Description |
|---|---|---|
| A | Arquad 12-50 (Armak Co.) | 50 percent by weight N-alkyl trimethyl ammonium chloride wherein the alkyl group contains from 12 to 16 carbon atoms and is derived from coconut oil. |
| B | Deriphat BA (Henkel, Inc.) | 60 percent by weight coco-amido betaine. |
| C | Textamine Oxide CA (Henkel, Inc.) | 50 percent by weight cocoyl-amido alkylamine oxide wherein the alkyl group contains about 12 to 16 carbon atoms. |

TABLE 1

| Example | Foaming Agent Mixture: Foaming Agent (Parts by wt.) | Foaming Agent Mixture: Foaming Agent (Parts by wt.) | Crude Oil (Parts by wt.) | $CaCO_3$ (Parts by wt.) | Anti-Sludge Agent (Parts by wt.) | Drain Half-Life (Seconds) |
|---|---|---|---|---|---|---|
| 1 | 1A | - | 5 | - | - | 173 |
| 2 | - | 1B | 5 | - | - | 0 |
| 3 | 0.5A | 0.5B | 5 | - | - | 292 |
| 4 | 1A | - | 5 | - | - | 173 |
| 5 | - | 1C | 5 | - | - | 0 |
| 6 | 0.5A | 0.5C | 5 | - | - | 427 |
| 7 | 0.5A | 0.5B | 5 | 5 | - | 243 |
| 8 | 0.5A | 0.5C | 5 | 5 | 0.25 | 234 |
| 9 | 1A | - | - | - | - | 319 |
| 10 | - | 1B | - | - | - | 0 |
| 11 | 0.5A | 0.5B | - | - | - | 293 |
| 12 | 1A | - | - | - | - | 319 |
| 13 | - | 1C | - | - | - | 153 |
| 14 | 0.5A | 0.5C | - | - | - | 439 |

Examples 1 through 6 show that mixtures of foaming agents produce significantly more stable foams, in the presence of crude oil, than do the individual foaming agents.

Examples 7 and 8 indicate that neither calcium carbonate nor an anti-sludge agent commonly used in oil well acidizing mixtures totally inhibit the action of the foaming agent mixtures. It should be noted that longer half-lives are obtained with the mixed contaminants than observed for foaming agent A alone, in the presence of only crude oil contamination.

Examples 9 through 14 demonstrate the properties of foams as they would be produced, prior to use in wells or industrial equipment. These uncontaminated foaming agent mixtures are generally comparable to agent A alone in producing stable foams, but are superior to agents B or C individually. Comparison of results with those obtained in Examples 1 through 6, however, shows that foam stabilities with the mixed foaming agents are not significantly affected by adding a crude oil contaminant, while stabilities with the individual foaming agents are greatly decreased.

Example 15

The production from an Orange County, California, oil well declines from 78/61 (12,4/9,7) (gross/net oil) barrels ($m^3$) per day to 34/23 (5,4/3,7) (gross/net oil) barrels ($m^3$) per day. This decline in production is due to the deposition of an oily calcium carbonate scale in both the well and the formation rock in the vicinity of the well. It is desired to dissolve this scale with an emulsion of an aqueous acid solution and an aromatic solvent. Because the well has over 1,500 feet (457 m) of producing interval, it is preferred to use the emulsion in foam form to more efficiently and uniformly distribute the treating fluid over the entire producing interval. The foam also facilitates well clean-up after treatment due to the release of pressure of the compressed gas when the well is returned to production, and because foam is a good carrier for fine particles dislodged by the treatment when the foam backflows out of the well. The well is treated in three stages.

(1) First, a drill bit is run through the slotted liner extending over the producing interval to mechanically remove the scale build-up on the interior of the liner.

(2) Next, the liner and the sidewall of the well are treated with a foamed acid-solvent emulsion in a manner to minimize invasion of the reservoir by the treating composition. There are admixed in a tank 640 gallons (2.4 $m^3$) of a 15 percent by weight aqueous solution of hydrochloric acid, 4 gallons (0.015 $m^3$) of a mixture of an amine, an acetylenic alcohol and a cuprous salt as a corrosion inhibitor, 160 gallons (0.605 $m^3$) of super-high flash-point naphtha as an aromatic solvent, 14 gallons (0.053 $m^3$) of an alkyl aryl sulfonate emulsifying agent, and, as a foaming agent mixture, 30 gallons (0.114 $m^3$) of a 50 percent by weight aqueous solution of a 12 to 15 carbon atom N-alkyl trimethylammonium chloride and 6 gallons (0.023 $m^3$) of a 60 percent by weight aqueous solution of cocoamido betaine. The 850 gallons (3.2 $m^3$) of emulsion are pumped into 2-7/8-inch ($7.3.10^{-2}$m) tubing at the rate of about 0.65 gallons (0.0024 $m^3$) per minute and a pressure ranging from 600 to 1,150 pounds per square inch (psi).($41.10^5$ Pa to $79.10^5$ Pa) Simultaneously, there are pumped into the tubing about 27,600 standard cubic feet (SCF) (773 $m^3$) of nitrogen at the rate of 750 to 800 SCF (21 $m^3$ to 22.4 $m^3$) per minute. Valves at the surface in communication with the tubing-casing annulus are open so the fluid injected down the tubing tends to be displaced through the liner, up the annulus and out of the well rather than penetrating the reservoir to any extent. After the treating fluid is pumped down the tubing, the fluids remaining in the well are lifted to the surface by reverse circulation wherein 82,650 SCF (2314 $m^3$) of nitrogen are injected down the annulus and fluids are produced up the tubing.

(3) After the well is cleaned out in this manner, a packer is positioned in the annulus so that any fluid subsequently injected down the tubing is forced out into the reservoir. About 14,640 gallons (55.4 $m^3$) of emulsion are prepared as described above by combining 11,360 gallons (43 $m^3$) of 15 percent by weight aqueous solution of hydrochloric acid, 2,840 gallons (10.7 $m^3$) of super-high flash-point naphtha, 241 gallons (0.91 $m^3$) of alkyl aryl sulfonate emulsifier; 71 gallons (0.27 $m^3$) of the above-described corrosion inhibitor, 25 gallons (0.09 $m^3$) of a 50 percent by weight aqueous solution of a 12 to 15 carbon atom N-alkyl trimethylammonium chloride and 103 gallons (0.39 $m^3$) of a 60 percent by weight aqueous solution of cocoamido betaine. Emulsion is pumped down the tubing at an injection rate of about 0.5 to 1.5 barrels per minute (0.078 to 0.23 $m^3$/min) while simultaneously pumping nitrogen into the tubing at a rate of 800/1,200 SCF (22.4 to 33.6 $m^3$) per minute and a pump pressure of 1,000 to 2,000 p.s.i. ($68.10^5$ Pa to $136.10^5$ Pa) to form a foam. After each 3,500-gallon (13.2 $m^3$) segment of emulsion is pumped in this manner, the ratio of gas to liquid being injected is increased by increasing the pumping rate of nitrogen

to 1,700 SCF (47.6 $m^3$) per minute. After 500 gallons (1.9 $m^3$) of emulsion are pumped under these conditions, the pumping rate of nitrogen is lowered to 800 SCF (22.4 $m^3$) per minute for the next 3,500-gallon (13.2 $m^3$) segment of emulsion. This change in volume of fluids injected is an effort to create a series of relatively small slugs of foam having a relatively high viscosity alternately with a series of relatively large slugs of foam having a lower viscosity. The slugs of high viscosity foam act as a diverting agent in the reservoir to change the flow path of the main body of foam being injected. After the entire 14,640 gallons (55.4 $m^3$) of emulsion and 400,000 SCF (11200 $m^3$) of nitrogen have been pumped, the foam remaining in the injection tubing is displaced out into the reservoir by injecting an additional 4,800 SCF (134.4 $m^3$) of nitrogen. The well is immediately returned to production through the former injection string. The well flows for about one hour and is then returned to production by a rod pump.

Example 16

A 18925 litre (5,000-gallon) cylindrical industrial tank is coated with a scale consisting of a mixture of an oil sludge and iron oxide. It is desired to remove this scale using a minimum amount of solvent. In a 1890 litre (500-gallon) paddle-mixing tank, there are introduced 1135 litres (300 gallons) of a 10 percent by weight aqueous solution of citric acid, 7.6 litres (2 gallons) of alkyl pyridines corrosion inhibitor, 26.5 litres (7 gallons) of octyl phenol condensed with 10 moles of ethylene oxide as a nonionic emulsifying agent, 340 litres (90 gallons) of methyl ethyl ketone as an aromatic solvent, and, as a foaming agent mixture, 30 litres (8 gallons) of 100 percent active cetylpyridinium chloride and 19 litres (5 gallons) of a 50 percent by weight aqueous solution of cocoylamido alkylamine oxide wherein the alkyl group contains about 12 to 16 carbon atoms. The mixture is agitated to form an emulsion. The emulsion is pumped into one leg of a T-conduit leading to the industrial tank at a rate of about 38 litres (10 gallons) per minute. Into the other leg of the T-conduit are injected 28$m^3$ (1,000 SCF) per minute of air. A foam forms as the emulsion and air meet and pass through the conduit leading to the industrial tank. The industrial tank is filled with foam and allowed to sit for 8 hours. At the end of this time, the foam is flushed from the tank with water. A visual examination of the tank shows that the scale has been substantially completely removed.

The features disclosed in the foregoing description and/or in the following claims may, both separately and in any combination thereof, be material for realising the invention in diverse forms thereof.

**Claims**

**1.** An aqueous foam-treating fluid composition comprising:

(a) about 5 to 99 parts by weight of an aqueous solution of an acid component selected from mineral acids and organic carboxylic acids which form water-soluble or acid-soluble salts of alkali metals and alkaline earth metals said solution having a pH value of 1 or less in the case of a mineral acid and a pH value of about 3 or less in the case of an organic carboxylic acid;

(b) about 0.04 to 1,200 parts by weight of a gas; and

(c) about 0.1 to 10 parts by weight of a foaming agent mixture comprising:

(i) 0.01 to 9.5 parts by weight of a quaternary ammonium compound surface active agent; and

(ii) 9.5 to 0.01 parts by weight of an additive which either: is an alkylamido alkylamine oxide surface active agent having the formula:

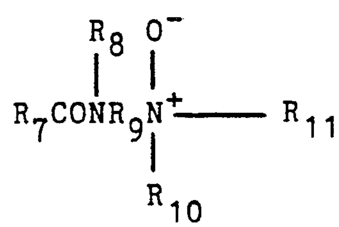

wherein $R_7$ is an alkyl group containing 1 to about 18 carbon atoms, $R_8$ is hydrogen or a substituted or unsubstituted, branched or unbranched alkyl group containing 1 to about 18 carbon atoms, $R_9$ is a substituted or unsubstituted, branched or unbranched, alkylene group containing 1

to about 18 carbon atoms, and $R_{10}$ and $R_{11}$ are each substituted or unsubstituted, branched or unbranched, alkyl groups containing 1 to about 18 carbon atoms; or is an amphoteric betaine surface active agent having the formula:

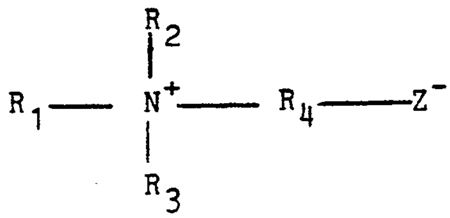

wherein $R_1$ is a high molecular weight substituted or unsubstituted alkyl radical having about 10 to 20 carbon atoms, $R_2$ and $R_3$ are each substituted or unsubstituted alkyl radicals having about 1 to 3 carbon atoms, $R_4$ is an alkylene or hydroxyalkylene radical having about 1 to 4 carbon atoms, and z is an anion selected from $SO_3^=$ and $COO^=$ radicals.

**2.** A composition according to claim 1, including from about 1 to 95 parts by weight of an organic solvent selected from polar solvents, hydrocarbon solvents, halogenated hydrocarbon solvents and mixtures thereof; and an emulsifying agent.

**3.** A composition according to claim 2, wherein the emulsifying agent is present in the amount of about 0.05 to 5 parts by weight per 100 parts by weight combined acid component and organic solvent.

**4.** A composition according to claim 2 or 3, wherein the emulsifying agent is selected from water-soluble anionic, cationic, nonionic and amphoteric surface active agents.

**5.** A composition according to any one of claims 1 to 4, wherein the acid component is a mineral acid.

**6.** A composition according to claim 5, wherein the mineral acid is hydrochloric acid.

**7.** A composition according to any one of claims 1 to 6, wherein the gas is selected from air, nitrogen, natural gas, methane, butane and carbon dioxide.

**8.** A composition according to any preceding claim, wherein the quaternary ammonium compound is a quaternary ammonium chloride.

**9.** A composition according to any one of claims 1 to 7, wherein the quaternary ammonium compound is selected from compounds corresponding to the formulae:

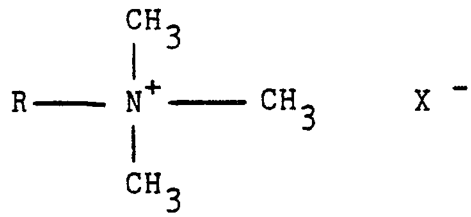

;

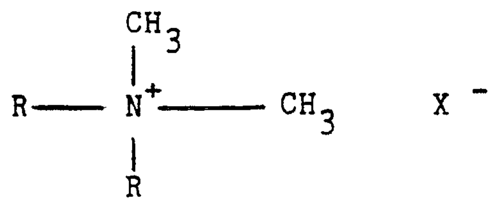

;

and

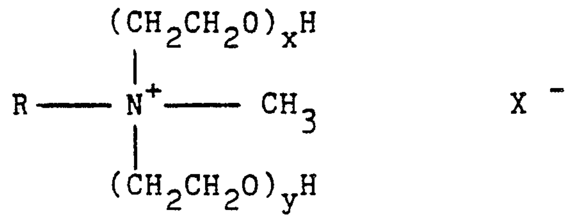

wherein the R groups are the same or different straight chain, branched, or cyclic organic groups which are saturated or unsaturated, substituted or unsubstituted groups containing from about 2 to about 18 carbon atoms; X is an anion selected from chloride, iodide, bromide and sulfate; and x and y have values from about 1 to 20.

**10.** A composition according to any preceding claim, wherein the additive of subparagraph (c) (ii) is cocoylamido alkylamine oxide, in which the alkyl group contains about 12 to about 16 carbon atoms.

**11.** A composition according to any one of claims 1 to 9, wherein the additive of subparagraph (c) (ii) is cocoamido betaine.

**12.** A composition according to any one of claims 1 to 9, wherein the additive of subparagraph of (c) (ii) is an alkylamido alkylamine oxide surface active agent having the formula:

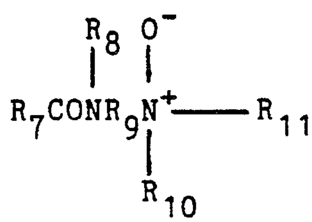

wherein $R_7$ is an alkyl group containing 1 to about 18 carbon atoms, $R_8$ is hydrogen or a substituted or unsubstituted, branched or unbranched alkyl group containing 1 to about 18 carbon atoms, $R_9$ is a substituted or unsubstituted, branched or unbranched, alkylene group containing 1 to about 18 carbon atoms, and $R_{10}$ and $R_{11}$ are each substituted or unsubstituted, branched or unbranched, alkyl groups containing 1 to about 18 carbon atoms.

**13.** A foamed emulsion treating fluid composition for dissolving acid-soluble portions of a surface and acid-soluble scale present on the surface and consisting essentially of:

(a) about 25 to 95 parts by weight of an aqueous solution of mineral or organic carboxylic acids which form water-soluble or acid-soluble salts of alkali metals and alkaline earth metals said solution having a pH value of 1 or less in the case of a mineral acid and a pH value of about 3 or less in the case of an organic carboxylic acid;
(b) about 10 to 800 parts by weight of a gas selected from air, nitrogen, natural gas, methane, butane and carbon dioxide;
(c) about 5 to 40 parts by weight of an organic solvent selected from polar solvents, hydrocarbon solvents, halogenated hydrocarbon solvents and mixtures thereof;
(d) about 0.05 to 5 parts by weight, per 100 parts by weight of said combined aqueous acid solution and said organic solvent, of an emulsifying agent selected from water soluble anionic and nonionic surface active agents; and
(e) about 0.2 to 5 parts by weight of a foaming agent mixture comprising:
(i) 0.1 to 5 parts by weight of a quaternary ammonium compound selected from compounds corresponding to the formulae:

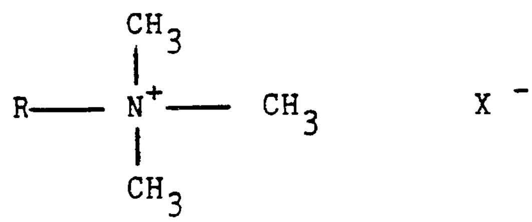
;

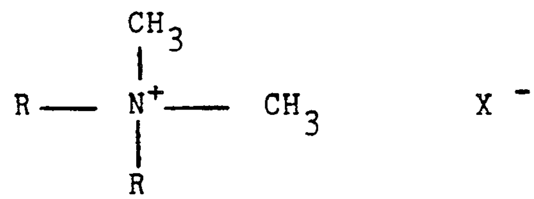
;

and

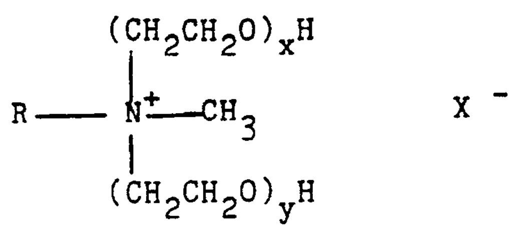

wherein the R groups are the same or different straight chain, branched, or cyclic organic groups which are saturated or unsaturated, substituted or unsubstituted groups containing about 2 to about 18 carbon atoms; X is an anion selected from chloride, iodide, bromide and sulfate; and x and y have values from about 1 to 20; and
(ii) 5 to 0.1 parts by weight of an additive which either: is an alkylamido alkylamine oxide surface active agent having the formula:

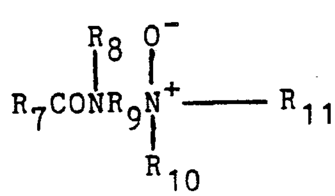

wherein $R_7$ is an alkyl group containing 1 to about 18 carbon atoms, $R_8$ is hydrogen or a substituted or unsubstituted, branched or unbranched alkyl group containing 1 to about 18 carbon atoms, $R_9$ is a substituted or unsubstituted, branched or unbranched, alkylene group containing 1 to about 18 carbon atoms, and $R_{10}$ and $R_{11}$ are each substituted or unsubstituted, branched or unbranched, alkyl groups containing 1 to about 18 carbon atoms; or is an amphoteric betaine surface active agent having the formula:

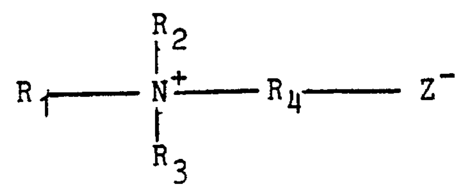

wherein $R_1$ is a high molecular weight alkyl radical having about 10 to 20 carbon atoms, $R_2$ and $R_3$ are each alkyl radicals having about 1 to 3 carbon atoms, $R_4$ is an alkylene or hydroxyalkylene radical having about 1 to 4 carbon atoms, and Z is an anion selected from $SO_3^=$ and $COO^=$ radicals.

**14.** A composition according to claim 13, wherein the additive of subparagraph (e) (ii) is an alkylamido alkylamine oxide surface active agent having the formula:

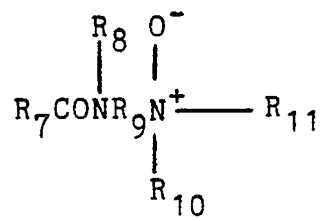

wherein $R_7$ is an alkyl group containing 1 to about 18 carbon atoms, $R_8$ is hydrogen or a substituted or unsubstituted, branched or unbranched alkyl group containing 1 to about 18 carbon atoms, $R_9$ is a substituted or unsubstituted, branched or unbranched, alkylene group containing 1 to about 18 carbon atoms, and $R_{10}$ and $R_{11}$ are each substituted or unsubstituted, branched or unbranched, alkyl groups containing 1 to about 18 carbon atoms.

**15.** A method for removing scale from a surface, comprising contacting the scale with a fluid composition according to any preceding claim.

**16.** A method for increasing the permeability of a subterranean geological reservoir penetrated by a well and filter media present in the well, which comprises introducing through the said well and into the reservoir surrounding the well a fluid composition according to any one of claims 1 to 14.

**17.** A method for dissolving acid-soluble portions of a subterranean reservoir penetrated by a well, acid-soluble scale present in the reservoir and the well and oil-soluble deposits present in the reservoir and the well, by contacting the reservoir, scale and deposits with a foamed emulsion consisting essentially of:

(a) about 15 to 95 parts by weight of an aqueous solution of hydrochloric acid, said solution having a pH value of 1 or less;
(b) about 10 to 800 parts by weight air or nitrogen,
(c) about 5 to 40 parts by weight of naphtha,
(d) about 0.05 to 5 parts by weight, per 100 parts by weight of said combined aqueous solution of hydrochloric acid and naphtha, of an anionic or nonionic water-soluble surface active agent and an emulsifying agent,
(e) about 0.2 to 5 parts by weight of a foaming agent mixture comprising:
(i) 0.1 to 5 parts by weight of an N-alkyltrimethyl ammonium chloride derived from coconut oil, and

(ii) 5 to 0.1 parts by weight of cocoamido betaine.

**Revendications**

1. Une composition fluide aqueuse de traitement sous forme de mousse, comprenant:
   (a) environ 5 à 99 parties en poids d'une solution aqueuse d'un composant acide choisi parmi des acides minéraux et des acides carboxyliques organiques qui forment des sels de métaux alcalins et de métaux alcalino-terreux solubles dans l'eau ou solubles dans un acide cette solution ayant un pH de 1 ou moins dans le cas a d'un acide minéral et un pH d'environ 3 au moins dans le cas d'un acide carboxylique organique;
   (b) environ 0,04 à 1200 parties en poids d'un gaz; et
   (c) environ 0,1 à 10 parties en poids d'un mélange d'agents moussants comprenant:
   (i) 0,01 à 9,5 parties en poids d'un agent tensioactif de type composé ammonium quaternaire; et
   (ii) 9,5 à 0,01 parties en poids d'un additif qui est:
   soit un agent tensioactif de type oxyde d'alkylamido alkylamine ayant la formule:

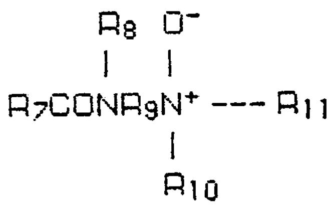

   dans laquelle $R_7$ est un groupe alkyle contenant 1 a environ 18 atomes de carbone, $R_8$ est un atome d'hydrogène ou un groupe alkyle substitué ou non substitué, a chaîne droite ou ramifiée contenant 1 à environ 18 atomes de carbone, $R_9$ est un groupe alkylène substitué ou non substitué, a chaîne droite ou ramifée contenant 1 à environ 18 atomes de carbone, et $R_{10}$ et $R_{11}$ sont chacun un groupe alkyle substitué ou non substitué, à chaîne droite ou ramifiée contenant 1 à environ 18 atomes de carbone;
   soit un agent tensioactif de type bétaïne amphotère ayant la formule:

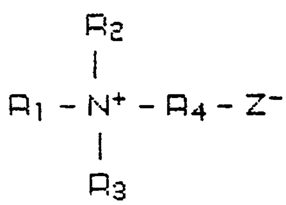

   dans laquelle $R_1$ est un groupe alkyle substitué ou non substitué, de haut poids moléculaire ayant d'environ 10 à 20 atomes de carbone, $R_2$ et $R_3$ sont chacun un groupe alkyle substitué ou non substitué, contenant environ 1 à 3 atomes de carbone, $R_4$ est un radical alkylène ou hydroxyalkylène ayant environ 1 à 4 atomes de carbone, et Z est un anion choisi parmi les radicaux $SO_3^=$ et $COO^=$.

2. Une composition suivant la revendication 1, comprenant d'environ 1 à 95 parties en poids d'un solvant organique choisi parmi des solvants polaires des solvants hydrocarbonés, des solvants hydrocarbonés halogénés et leurs mélanges; et un agent émulsifiant.

3. Une composition suivant la revendication 2, dans laquelle l'agent émulsifiant est présent en une quantité d'environ 0,05 à 5 parties en poids pour 100 parties en poids de la combinaison du composant acide et du solvant organique.

4. Une composition suivant les revendications 2 ou 3, dans laquelle l'agent émulsifiant est choisi parmi des agents tensioactifs solubles dans l'eau, anioniques, cationiques, non ioniques et amphotères.

5. Une composition suivant l'une quelconque des revendications 1 à 4, dans laquelle le composant acide

est un acide minéral.

6. Une composition suivant la revendication 5, dans laquelle l'acide minéral est l'acide chlorhydrique.

7. Une composition suivant l'une quelconque des revendications 1 à 6, dans laquelle le gaz est choisi parmi l'air, l'azote, le gaz naturel, le méthane, le butane et le dioxyde de carbone.

8. Une composition suivant l'une quelconque des revendications 1 à 7, dans laquelle le composé ammonium quaternaire est un chlorure d'ammonium quaternaire.

9. Une composition suivant l'une quelconque des revendications 1 à 7, dans laquelle le composé ammonium quaternaire est choisi parmi des composés correspondant aux formules:

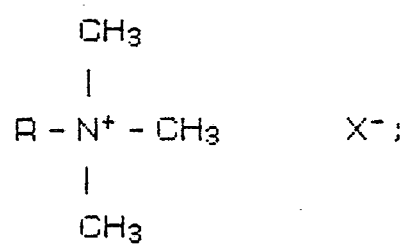

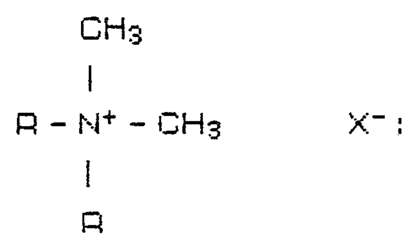

et

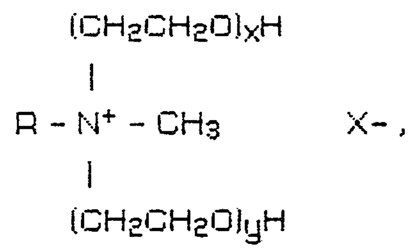

dans lesquelles les groupes R sont des groupes organiques à chaîne droite ou ramifiée, ou cycliques, identiques ou différents, qui sont des groupes saturés ou insaturés, substitués ou non substitués contenant d'environ 2 à 18 atomes de carbone; X est un anion choisi parmi les anions chlorure, iodure, bromure et sulfate; et x et y ont des valeurs d'environ 1 à 20.

10. Une composition suivant l'une quelconque des revendications 1 à 9, dans laquelle l'additif mentionné dans le sous-paragraphe (c) (ii) est un oxyde de cocoylamido alkylamide, dans lequel le groupe alkyle contient d'environ 12 à environ 16 atomes de carbone.

11. Une composition suivant l'une quelconque des revendications 1 à 9, dans laquelle l'additif mentionné dans le sous-paragraphe (c) (ii) est une cocoamido bétaïne.

12. Une composition suivant l'une quelconque des revendications 1 à 9, dans laquelle l'additif mentionné dans le sous-paragraphe (c) (ii) est un agent tensioactif de type oxyde d'alkylamido alkylamine ayant la formule:

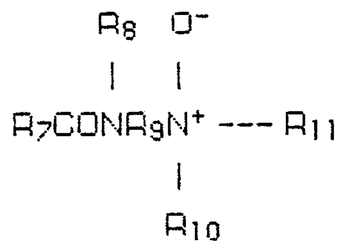

dans laquelle $R_7$ est un groupe alkyle contenant 1 à environ 18 atomes de carbone, $R_8$ est un atome d'hydrogène ou un groupe alkyle substitué ou non substitué, à chaîne droite ou ramifiée contenant 1 à environ 18 atomes de carbone, $R_9$ est un groupe alkylène substitué ou non substitué, à chaîne droite ou ramifiée contenant 1 à environ 18 atomes de carbone, et $R_{10}$ et $R_{11}$ sont chacun un groupe alkyle substitué ou non substitué, à chaîne droite ou ramifiée contenant 1 à environ 18 atomes de carbone.

**13.** Une composition fluide en émulsion de traitement sous forme de mousse pour dissoudre des parties solubles dans l'acide d'une surface et du tartre soluble dans l'acide présent sur la surface et consistant essentiellement en:

(a) environ 25 à 95 parties en poids d'une solution aqueuse d'acides minéraux ou carboxyliques organiques qui forment des sels de métaux alcalins et de métaux alcalino-terreux solubles dans l'eau ou solubles dans un acide cette solution ayant un pH de 1 ou moins dans le cas d'un acide minéral et un pH d'environ 3 ou moins dans le cas d'un acide carboxylique organique;

(b) environ 10 à 800 parties en poids d'un gaz choisi parmi l'air, l'azote, le gaz naturel, le méthane, le butane et le dioxyde de carbone;

(c) environ 5 à 40 parties en poids d'un solvant organique choisi parmi des solvants polaires, des solvants hydrocarbonés. des solvants hydrocarbonés halogénés et leurs mélanges;

(d) environ 0,05 à 5 parties en poids pour 100 parties en poids de la combinaison de cette solution acide aqueuse et de ce solvant organique, d'un agent émulsifiant choisi parmi des agents tensioactifs solubles dans l'eau, anioniques et non ioniques; et

(e) environ 0,2 à 5 parties en poids d'un mélange d'agents moussants comprenant:

(i) 0,1 à 5 parties en poids d'un composé ammonium quaternaire choisi pami des composés correspondant aux formules:

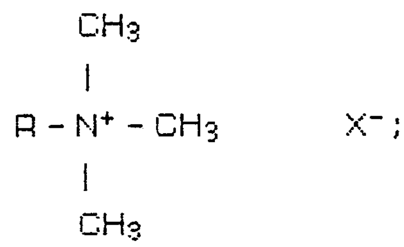

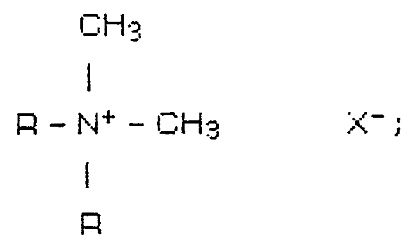

et

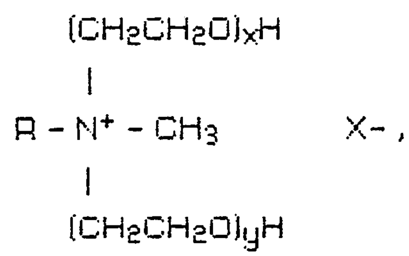

dans lesquelles les groupes R sont des groupes organiques à chaîne droite ou ramifiée, ou cycliques, identiques ou différents, qui sont des groupes saturés ou insaturés, substitués ou non substitués contenant d'environ 2 à environ 18 atomes de carbone; X est un anion choisi parmi les anions chlorure, iodure, bromure et sulfate; et x et y ont des valeurs d'environ 1 à 20; et

(ii) 5 à 0,1 parties en poids d'un additif qui est:

soit un agent tensioactif de type oxyde d'alkylamido alkylamine ayant la formule:

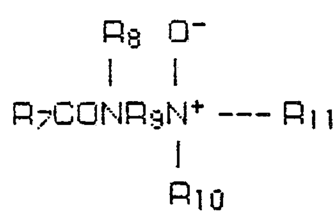

dans laquelle $R_7$ est un groupe alkyle contenant 1 à environ 18 atomes de carbone, $R_8$ est un atome d'hydrogène ou un groupe alkyle substitué ou non substitué, à chaîne droite ou ramifiée contenant 1 à environ 18 atomes de carbone $R_9$ est un groupe alkylène substitué ou non substitué, à chaîne droite ou ramifiée contenant 1 à environ 18 atomes de carbone, et $R_{10}$ et $R_{11}$ sont chacun un groupe alkyle substitué ou non substitué, à chaîne droite ou ramifiée contenant 1 à environ 18 atomes de carbone;

soit un agent tensioactif de type bétaïne amphotère ayant la formule:

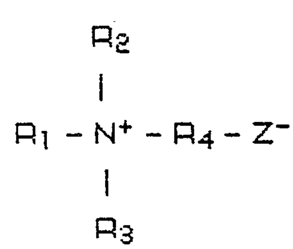

dans laquelle $R_1$ est un groupe alkyle de haut poids moléculaire ayant d'environ 10 à 20 atomes de carbone, $R_2$ et $R_3$ sont chacun un groupe alkyle contenant environ 1 à 3 atomes de carbone, $R_4$ est un radical alkylène ou hydroxyalkylène ayant environ 1 à 4 atomes de carbone, et Z est un anion choisi parmi les radicaux $SO_3^{=}$ et $COO^{=}$.

**14.** Une composition suivant la revendication 13, dans laquelle l'additif mentionné dans le sous-paragraphe (e) (ii) est un agent tensioactif de type oxyde d'alkylamido alkylamine ayant la formule:

$$\begin{array}{c} \quad\quad\quad R_3 \quad O^- \\ \quad\quad\quad | \quad\;\; | \\ R_7CONR_9N^+ --- R_{11} \\ \quad\quad\quad\quad | \\ \quad\quad\quad\quad R_{10} \end{array}$$

dans laquelle $R_7$ est un groupe alkyle contenant 1 à environ 18 atomes de carbone, $R_8$ est un atome d'hydrogène ou un groupe alkyle substitué ou non substitué à chaîne droite ou ramifiée contenant 1 à environ 18 atomes de carbone, $R_9$ est un groupe alkylène substitué ou non substitué, à chaîne droite ou ramifiée contenant 1 à environ 18 atomes de carbone, et $R_{10}$ et $R_{11}$ sont chacun un groupe alkyle substitué ou non substitué à chaîne droite ou ramifiée contenant 1 à environ 18 atomes de carbone.

**15.** Un procédé pour éliminer le tartre d'une surface, comprenant la mise en contact du tartre avec une composition fluide suivant l'une quelconque des revendications précédentes.

**16.** Un procédé pour augmenter la perméabilité d'un réservoir géologique souterrain pénétré par un puits et des moyens de filtration présents dans le puits, qui comprend l'introduction dans ce puits et dans le réservoir entourant le puits, d'une composition fluide suivant l'une quelconque des revendications 1 à 14.

**17.** Un procédé pour dissoudre des parties solubles dans l'acide d'un réservoir souterrain pénétré par un puits, du tartre soluble dans l'acide présent dans le réservoir et le puits et des dépôts solubles dans l'huile présents dans le réservoir et le puits, par mise en contact du réservoir, du tartre et des dépôts avec une émulsion sous forme de mousse consistant essentiellement en:
(a) environ 15 à 95 parties en poids d'une solution aqueuse d'acide chlorhydrique, cette solution ayant un pH de 1 ou moins;
(b) environ 10 à 800 parties en poids d'air ou d'azote;
(c) environ 5 à 40 parties en poids de naphta;
(d) environ 0,05 à 5 parties en poids pour 100 parties en poids de la combinaison de cette solution aqueuse d'acide chlorhydrique et de ce naphta, d'un agent tensioactif soluble dans l'eau anionique ou non ionique et d'un agent émulsifiant;
(e) environ 0,2 à 5 parties en poids d'un mélange d'agents moussants comprenant:
(i) 0,1 à 5 parties en poids d'un chlorure de N-alkyltriméthyl ammonium dérivé d'huile de coco; et
(ii) 5 à 0,1 parties en poids de cocoamido bétaïne.

## Ansprüche

**1.** Wäßrige Flüssigkeitszusammensetzung zur Schaumbehandlung, gekennzeichnet durch:
(a) etwa 5 bis 99 Gew.-Teile einer wäßrigen Lösung eines Säurebestandteils, ausgewählt aus Mineralsäuren und organischen Carbonsäuren, die wasserlösliche oder säurelösliche Salze von Alkalimetallen und Erdalkalimetallen bilden, wobei besagte Lösung einem pH-Wert von 1 oder weniger im Fall einer Mineralsäure und einem pH-Wert von 3 oder weniger im Fall einer organischen Carbonsäure aufweist;
(b) etwa 0,04 bis 1200 Gew.-Teile eines Gases; und
(c) etwa 0,1 bis 10 Gew.-Teile eines Schaumbildnergemisches, das folgendes umfaßt:
(i) 0,01 bis 9,5 Gew.-Teile eines oberflächenaktiven Mittels in Form einer quatärneren Ammoniumverbindung; und

(ii) 9,5 bis 0,01 Gew.-Teile eines Zusatzes, der entweder: ein oberflächenaktives Mittel in Form eines Alkylamido-Alkylaminoxids ist, mit der Formel

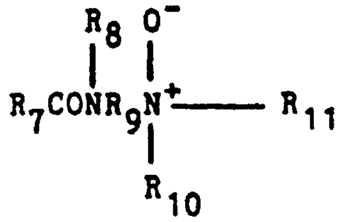

in der $R_7$ eine Alkylgruppe ist, die 1 bis etwa 18 Kohlenstoffatome enthält, $R_8$ Wasserstoff oder eine substituierte oder unsubstituierte, verzweigte oder unverzweigte Alkylgruppe ist, die 1 bis etwa 18 Kohlenstoffatome enthält, $R_9$ eine substituierte oder unsubstituierte, verzweigte oder unverzweigte Alkylengruppe ist, die 1 bis etwa 18 Kohlenstoffatome enthält, und $R^1{}_0$ und $R_{11}$ jeweils substituierte oder unsubstituierte, verzweigte oder unverzweigte Alkylgruppen sind, die 1 bis 18 Kohlenstoffatome enthalten; oder ein oberflächenaktives Mittel in Form eines amphoterischen Betains ist, mit der Formel:

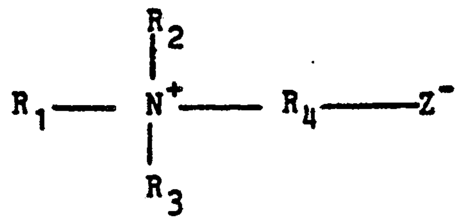

in der $R_1$ ein substituiertes oder unsubstituiertes Alkylradikal mit hohem Molekulargewicht und etwa 10 bis 20 Kohlenstoffatomen ist, $R_2$ und $R_3$ Jeweils substituierte oder unsubstituierte Alkylradikale mit etwa 1 bis 3 Kohlenstoffatomen sind, $R_4$ ein Alkylen oder Hydroxyalkylenradikal mit etwa 1 bis 4 Kohlenstoffatomen ist und z ein Anion ist, ausgewählt aus $SO_3^{=}$ - und $COO^{=\cdot}$ -Radikalen.

2. Zusammensetzung nach Anspruch 1, gekennzeichnet durch etwa 1 bis 95 Gew.-Teile eines organischen Lösungsmittels, ausgewählt aus polaren Lösungsmitteln, Kohlenwasserstofflösungsmitteln, halogenierten Kohlenwasserstofflösungsmitteln und Gemischen derselben; und einen Emulgator.

3. Zusammensetzung nach Anspruch 2, dadurch gekennzeichnet, daß der Emulgator in einer Menge von etwa 0,05 bis 5 Gew.-Teilen pro 100 Gew.-Teile kombinierter Säurekomponente und organischen Lösungsmittels vorhanden ist.

4. Zusammensetzung nach Anspruch 2 oder 3, dadurch gekennzeichnet, daß der Emulgator ausgewählt ist aus wasserlöslichen anionischen, kationischen, nicht-ionischen und amphoteren oberflächenaktiven Mitteln.

5. Zusammensetzung nach einem der Ansprüche 1 bis 4, dadurch gekennzeichnet, daß die Säurekomponente eine Mineralsäure ist.

6. Zusammensetzung nach Anspruch 5, dadurch gekennzeichnet, daß die Mineralsäure Salzsäure ist.

7. Zusammensetzung nach einem der Ansprüche 1 bis 6, dadurch gekennzeichnet, daß das Gas ausgewählt ist aus Luft, Stickstoff, Erdgas, Methan, Butan und Kohlendioxid.

8. Zusammensetzung nach einem der vorangehenden Ansprüche, dadurch gekennzeichnet, daß die quaternäre Ammoniumverbindung ein quaternäres Amminiumchlorid ist.

9. Zusammensetzung nach einem der Ansprüche 1 bis 7, dadurch gekennzeichnet, daß die quaternäre Ammoniumverbindung ausgewählt ist aus Verbindungen, die den folgenden Formeln entsprechen:

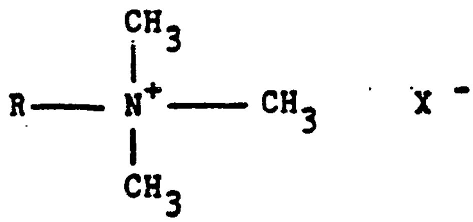

;

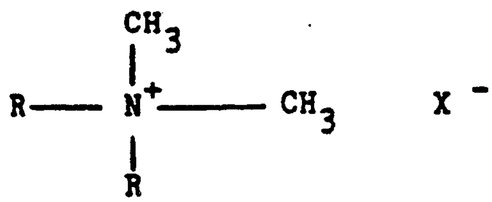

;

und

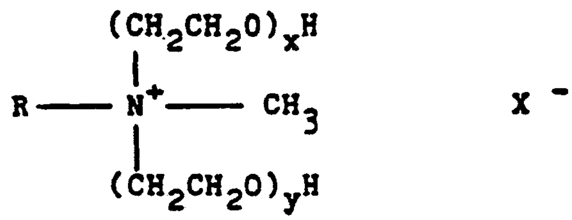

in denen die R-Gruppen dieselben oder verschiedene geradkettige, verzweigte oder ringförmige organische Gruppen sind, die gesättigte oder ungesättigte, substituierte oder unsubstituierte Gruppen sind, die von etwa 2 bis etwa 18 Kohlenstoffatomen enthalten; X ein Anion ist, ausgewählt aus Chlorid, Iodid, Bromid und Sulfat; und x und y Werte von etwa 1 bis 20 besitzen.

10. Zusammensetzung nach einem der vorangehenden Ansprüche, dadurch gekennzeichnet, daß das Additiv des Unterabschnitts (c) (ii) Cocoylamido-Alkylaminoxid ist, bei dem die Alkylgruppe etwa 12 bis 16 Kohlenstoffatome enthält.

11. Zusammensetzung nach einem der Ansprüche 1 bis 9, dadurch gekennzeichnet, daß das Additiv des Unterabschnitts (c) (ii) Cocoamidobetain ist.

12. Zusammensetzung nach einem der Ansprüche 1 bis 9, dadurch gekennzeichnet, daß das Additiv des Unterabschnitts (c) (ii) ein oberflächenaktives Mittel in Form eines Alkylamido-Alkylaminoxids ist, mit der Formel:

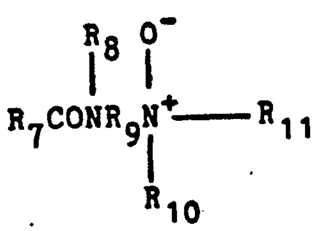

in der $R_7$ eine Alkylgruppe ist, die 1 bis etwa 18 Kohlenstoffatome enthält, $R_8$ Wasserstoff oder eine substituierte oder unsubstituierte, verzweigte oder unverzweigte Alkylgruppe ist, die 1 bis etwa 18 Kohlenstoffatome enthält, $R_9$ eine substituierte oder unsubstituierte, verzweigte oder unverzweigte

Alkylengruppe ist, die 1 bis etwa 18 Kohlenstoffatome enthält, und $R_{10}$ und $R_{11}$ jeweils substituierte oder unsubstituierte, verzweigte oder unverzweigte Alkylgruppen sind, die 1 bis etwa 18 Kohlenstoffatome enthalten.

**13.** Behandlungsflüssigkeitszusammensetzung in Form einer geschäumten Emulsion zum Lösen säurelöslicher Bereicher einer Oberfläche und auf der Oberfläche vorhandenen säurelöslichen Belags, die im wesentlichen aus folgendem besteht:

(a) etwa 25 bis 95 Gew.-Teile einer wäßrigen Lösung von Mineral- oder organischen Carbonsäuren, die wasserlösliche oder säurelösliche Salze von Alkalimetallen oder Erdalkalimetallen bilden, wobei besagte Lösung einen pH-Wert von 1 oder weniger im Fall einer Mineralsäure und einen pH-Wert von etwa 3 oder weniger im Fall einer organischen Carbonsäure aufweist;

(b) etwa 10 bis 800 Gew.-Teile eines Gases, ausgewählt aus Luft, Stickstoff, Erdgas, Methan, Butan und Kohlendioxid;

(c) etwa 5 bis 40 Gew.-Teile eines organischen Lösungsmittels, ausgewählt aus polaren Lösungsmitteln, Kohlenwasserstofflösungsmitteln, halogenierten Kohlenwasserstofflösungsmitteln und Gemischen derselben;

(d) etwa 0,05 bis 5 Gew.-Teile pro 100 Gew.-Teile besagter kombinierter wäßriger Säurelösung und besagten organischen Lösungsmittels, eines Emulgators, ausgewählt aus wasserlöslichen anionischen und nicht-ionischen oberflächenaktiven Mitteln; und

(e) etwa 0,2 bis 5 Gew.-Teile eines Schäumungsmittelgemisches, das folgendes umfaßt:

(i) 0,1 bis 5 Gew.-Teile einer quaternären Ammoniumverbindung, ausgewählt aus Verbindungen, die den folgenden Formeln entsprechen:

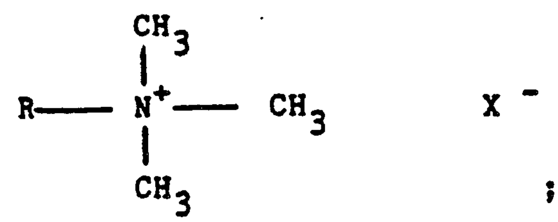

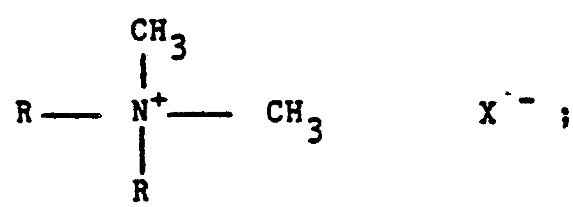

und

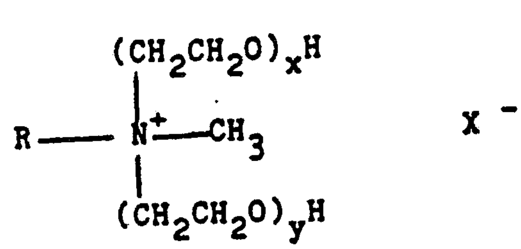

in denen die R-Gruppen dieselben oder verschiedene geradkettige, verzweigte oder ringförmige organische Gruppen sind, die gesättigte oder ungesättigte, substituierte oder unsubstituierte Gruppen sind, die etwa 2 bis etwa 18 Kohlenstoffatome enthalten; X ein Anion ist, ausgewählt aus Chlorid, Iodid, Bromid und Sulfat; und x und y Werte von etwa 1 bis 20 besitzen; und

(ii) 5 bis 0,1 Gew.-Teile eines Additivs, das entweder: ein oberflächenaktives Mittel in Form eines Alkylamido-Alkylaminoxids ist, mit der Formel:

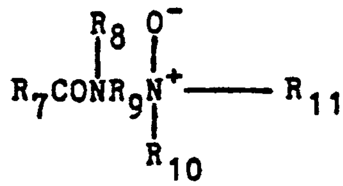

in der $R_7$ eine Alkylgruppe ist, die 1 bis etwa 18 Kohlenstoffatome- enthält, $R_8$ Wasserstoff oder eine substituierte oder unsubstituierte, verzweigte oder unverzeigte Alkylgruppe ist, die 1 bis etwa 18 Kohlenstoffatome enthält, $R_9$ eine substituierte oder unsubstituierte, verzweigte oder unverzweigte Alkylengruppe ist, die 1 bis etwa 18 Kohlenstoffatome enthält, und $R_{10}$ und $R_{11}$ Jeweils substituierte oder unsubstituierte, verzweigte oder unverzweigte Alkalgruppen sind, die 1 bis etwa 18 Kohlenstoffatome enthalten; oder ein oberflächenaktives Mittel in Form eines amphoterischen Betains ist, mit der Formel:

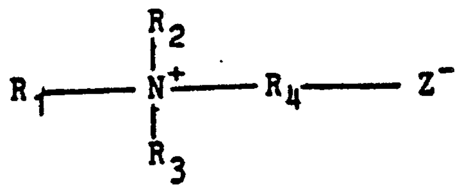

in der $R_1$ ein Alkylradikal mit hohem Molekulargewicht und etwa 10 bis 20 Kohlenstoffatomen ist, $R_2$ und $R_3$ jeweils Alkylradikale mit etwa 1 bis 3 Kohlenstoffatomen sind, $R_4$ ein Alkylen- oder Hydroxyalkylenradikal mit etwa 1 bis 4 Kohlenstoffatomen ist und Z ein Anion ist, ausgewählt aus $SO_3^=$ -und $COO^=$ -Radikalen.

**14.** Zusammensetzung nach Anspruch 13, dadurch gekennzeichnet, daß das Additiv von Unterabschnitt (e) (ii) ein oberflächenaktives Mittel in Form eines Alkylamido-Alkylaminoxids ist, mit der Formel:

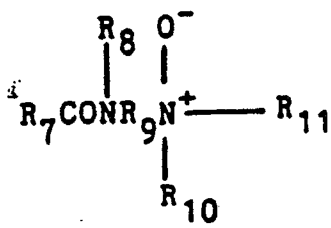

in der $R_7$ eine Alkylgruppe ist, die 1 bis etwa 18 Kohlenstoffatome enthält, $R_8$ Wasserstoff oder eine substituierte oder unsubstituierte, verzweigte oder unverzweigte Alkylgruppe ist, die 1 bis etwa 18 Kohlenstoffatome enthält, $R_9$ eine substituierte oder unsubstituierte, verzweigte oder unverzweigte Alkylengruppe ist, die 1 bis etwa 18 Kohlenstoffatome enthält, und $R^1{}_0$ und $R_{11}$ jeweils substituierte oder unsubstituierte, verzweigte oder unverzweigte Alkylgruppen sind, die 1 bis etwa 18 Kohlenstoffatome enthalten.

**15.** Verfahren zum Entfernen von Belag von einer Oberfläche, dadurch gekennzeichnet, daß der Belag mit einer Flüssigkeitszusammensetzung nach einem der vorangehenden Ansprüche in Kontakt gebracht wird.

**16.** Verfahren zum Erhöhen der Durchlässigkeit eines unterirdischen geologischen Reservoirs, wobei dieses von einem Bohrloch durchdrungen ist und im Bohrloch Filtermedien vorhanden sind, dadurch gekennzeichnet, daß durch besagtes Bohrloch in das Reservoir, welches das Bohrloch umgibt, hinein eine Flüssigkeitszusammensetzung nach einem der Ansprüche 1 bis 14 eingebracht wird.

17. Verfahren zum Lösen säurelöslicher Bereiche eines unterirdischen, von einem Bohrloch durchdrungenen Reservoirs, im Reservoir und im Bohrloch vorhandenen säurelöslichen Belags und im Reservoir und im Bohrloch vorhandenen öllöslichen Ablagerungen durch In-Kontakt-Bringen des Reservoirs, des Belags und der Ablagerungen mit einer geschäumten Emulsion, die im wesentlichen aus folgendem besteht:
    (a) etwa 15 bis 95 Gew.-Teile einer wäßrigen Salzsäurelösung wobei besagte Lösung einen pH-Wert von 1 oder weniger besitzt;
    (b) etwa 10 bis 800 Gew.-Teile Luft oder Stickstoff,
    (c) etwa 5 bis 40 Gew.-Teile Naphta,
    (d) etwa 0,05 bis 5 Gew.-Teile, pro 100 Gew.-Teile besagter kombinierter wäßriger Lösung von Sälzsäure und Naphta, eines anionischen oder nicht-ionischen wasserlöslichen oberflächenaktiven Mittels und eines Emulgator,
    (e) etwa 0,2 bis 5 Gew.-Teile eines Schäumungsmittelgemisches, das folgendes umfaßt:
        (i) 0,1 bis 5 Gew.-Teile eines N-Alkyltrimethylammoniumchlorids, abgeleitet von Kokosnußöl, und
        (ii) 5 bis 0,1 Gew.-Teile Cocoamidobetain.